# EUROPÄISCHE PATENTSCHRIFT

(11) **EP 0 341 196 B1**
(45) Veröffentlichungstag und Bekanntmachung des Hinweises auf die Patenterteilung: **07.04.1993**
(21) Anmeldenummer: 89730111.5
(22) Anmeldetag: 27.04.1989
(51) Int. Cl.: B01J 8/12, B01J 8/10, C05F 9/02, F26B 17/12, B01D 46/34, B01D 53/08, F28D 19/02

(54) **Reaktorvorrichtung zur grossflächigen Durchströmung von Wanderbettschüttungen**
Moving bed reactor having a large surface crossflow
Réacteurs à lit déplaçable pourvu d'une surface de passage étendue

(30) Priorität: 02.05.1988 DE 3815346
(43) Veröffentlichungstag der Anmeldung: 08.11.1989
(73) Patentinhaber: Michel-Kim, Herwig, D-10779 Berlin (DE)
(72) Erfinder: Michel-Kim, Herwig, D-10779 Berlin (DE)
(74) Vertreter: Pfenning, Meinig & Partner

(56) Entgegenhaltungen:
- DE-C- 646 182
- FR-A- 781 420
- GB-A- 329 827
- GB-A- 2 187 753
- US-A- 4 040 794

## Beschreibung

Die Erfindung betrifft eine Reaktorvorrichtung zur großflächigen Durchströmung von Wanderbettschüttungen nach dem Oberbegriff des Hauptanspruchs.

Reaktorvorrichtungen zur großflächigen Durchströmung von Wanderbettschüttungen sind für eine Vielzahl von Anwendungsgebieten bekannt. Dabei sollen die Schüttungen mit verhältnismäßig großen Volumenströmen großflächig und gleichmäßig ohne Kanalbildungen durchströmt werden. Dies gilt beispielsweise für Trocknungsanlagen, Wärmeregeneratoren für die Nachverbrennung von Abgasen, Kompostanlagen, Wanderbettfilter, Spülgaspyrolysen und dergleichen. Solange die Schüttungen und Volumenströme verhältnismäßig klein sind, kann ein Reaktor von unten nach oben durchströmt werden, wobei die Schüttungen mit einem Rührarm oder einem Schieber egalisiert und am Reaktorboden zentral ausgetragen werden.

Eine gleichmäßige Durchströmung wird aber bei großen Volumina wegen der erforderlichen Baugröße schwierig. Bei bekannten Schachtreaktoren werden Schüttungen, die zur Brückenbildung neigen, häufig ungleichmäßig durchströmt.

Aus der US-A- 4 040 794 ist ein Wanderbettfilter bekannt, bei dem die Wanderbettschüttung in einem Ringraum mit gasdurchlässigen Wänden aufgenommen ist. Das Gas wird in die Mitte des Ringraums eingeleitet und strömt durch die Schüttung. Um. den Ringraum herum sind Ringkanäle mit Umlenkelementen angeordnet, durch die das durch die Schüttung strömende Gas wieder in die Schüttung zurückgelenkt wird.

Der Erfindung liegt die Aufgabe zugrunde, eine Reaktorvorrichtung gemäß dem Oberbegriff des Hauptanspruchs zu schaffen, bei der große Durchströmungsquerschnitte bei verhältnismäßig niedriger durchströmter Schichthöhe zur Verfügung gestellt werden, wobei die Schüttung egalisiert und Brückenbildungen im der Schüttung vermieden werden sollen.

Diese Aufgabe wird erfindungsgemäß durch die kennzeichnenden Merkmale des Hauptanspruchs in Verbindung mit den Merkmalen des Oberbegriffs gelöst. Dadurch, daß das Reaktorgefäß der Reaktorvorrichtung mit einer Innenwandung und einer Außenwandung derart ausgebildet ist, daß ein ringförmiger Reaktorraum gebildet wird und die Außen- und Innenwandungen gas- und/oder flüssigkeitsdurchlässig sind, wird eine großflächige gleichmäßige Durchströmung ermöglicht, wobei durch Drehen der Außenwandung und/oder der Innenwandung die Schüttung egalisiert wird und Brückenbildungen vermieden werden. Durch diese Bauart der Reaktorvorrichtung lassen sich bei verhältnismäßig großen Durchmessern und entsprechender Bauhöhe große Durchströmungsquerschnitte auch bei kleinen durchströmten Schichten realisieren, da der Durchströmungsquerschnitt durch die mittlere Manteloberfläche definiert wird.

Durch die in den Unteransprüchen angegebenen Maßnahmen sind vorteilhafte Weiterbildungen und Verbesserungen möglich. Besonders vorteilhaft ist, daß das Fluid im Kreuzgegenstrom oder -gleichstrom geführt werden kann, wodurch Trocknungs- oder Filterwirkungen verbessert werden. Die vorgeschlagene Reaktorvorrichtung ist für zahlreiche Anwendungsgebiete einsetzbar, beispielsweise kann sie für Trocknungsvorgänge, Spülgaspyrolysen, Adsorptionen, Filtrationen, Kompostierungen oder als Regenarator für die Wärmeregenerierung verwendet werden.

Ausführungsbeispiele der Erfindung sind in der Zeichnung dargestellt und werden in der nachfolgenden Beschreibung näher erläutert. Es zeigen:
- Fig. 1: einen schematischen Längsschnitt durch eine Reaktorvorrichtung nach einem ersten Ausführungsbeispiel,
- Fig. 2: eine Aufsicht auf den Boden des Reaktorgefäßes nach Fig. 1 mit einer Drehvorrichtung zur Austragung,
- Fig. 3: einen schematischen Längsschnitt durch eine Reaktorvorrichtung gemäß einem zweiten Ausführungsbeispiel,
- Fig. 4: einen Längsschnitt durch eine Reaktorvorrichtung nach einem dritten Ausführungsbeispiel,
- Fig. 5: einen schematischen Längsschnitt durch eine Reaktorvorrichtung gemäß einem vierten Ausführungsbeispiel mit integriertem Wärmetauscher zur Anwendung als Trocknungs- oder Kompostanlage,
- Fig. 6: einen Längsschnitt durch eine Reaktorvorrichtung gemäß einem fünften Ausführungsbeispiel zur Anwendung als Regenerator für die Wärmeregenerierung, und
- Fig. 7: einen Längsschnitt durch eine Reaktoranordnung zur Anwendung als Kompostreaktor.

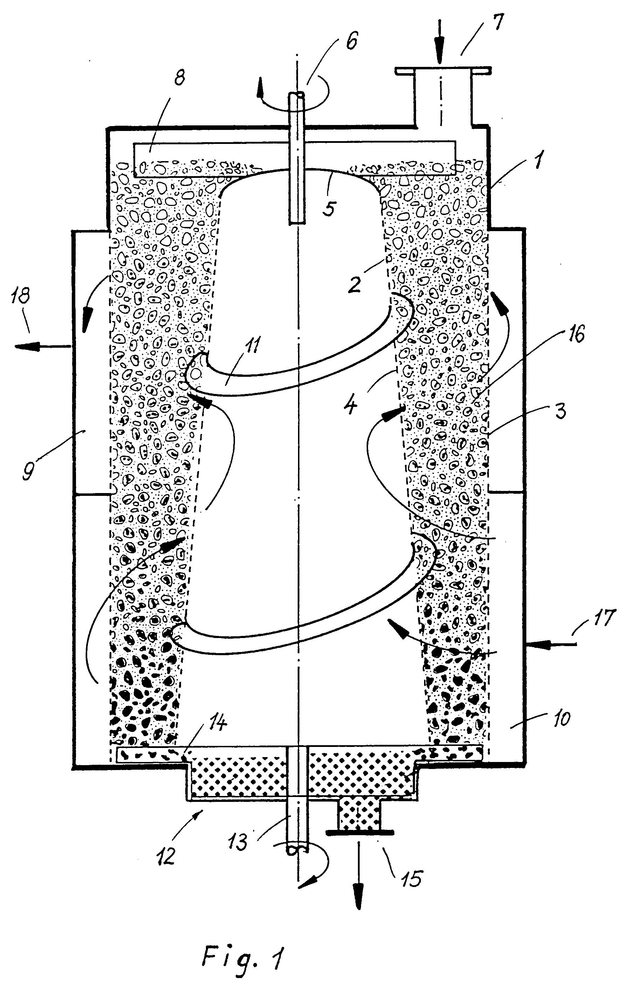

Die in Fig. 1 dargestellte Reaktorvorrichtung weist ein Reaktorgefäß 1 auf, in dem rotationssymmetrisch ein sich nach oben konisch verjüngender Innenmantel 2 aufgenommen ist. Die Außenwandung 3 des Reaktorgefäßes 1 und die Innenwandung 4 des Innenmantels 2 sind gas- und/oder flüssigkeitsdurchlässig. Der obere Teil des Innenmantels ist durch eine Abdeckung 5 abgedeckt. Der Innenmantel 2 ist drehbar angeordnet, was durch die als Welle ausgebildete Aufhängung 6 dargestellt ist. Im oberen Teil des Reaktorgefäßes 1 ist eine Öffnung 7 zur Zuführung der Schüttung vorgesehen. Weiterhin sind Rührarme 8 des oberen Teils des Reaktorgefäßes 1 drehbar angeordnet, beispielsweise mit der Welle der drehbaren Aufhängung 6 verbunden.

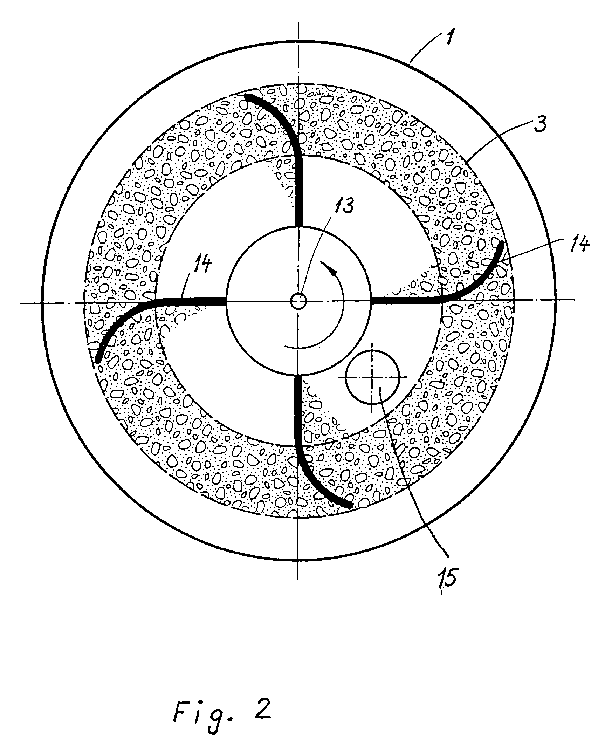

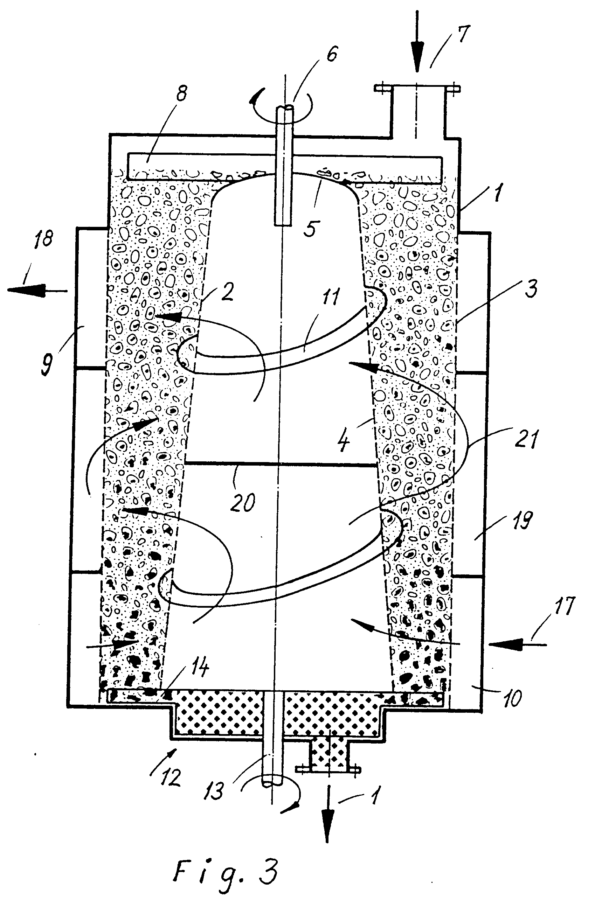

Die Außenwandung 3 des Reaktorgefäßes 1 wird von einer oberen Kammer 9 und einer unteren Kammer 10 umgeben. Auf dem Innenmantel 2 sind Schaufeln angeformt, die in dem dargestellten Ausführungsbeispiel als Förderspiralen ausgebildet sind. Im Boden des Reaktorgefäßes 1 ist eine Austragvorrichtung 12 angeordnet, die in Fig. 2 näher dargestellt ist. Danach ist eine Drehvorrichtung 13 vorgesehen, die in der Figur als Welle dargestellt ist, an der Schaufeln 14 befestigt sind. Durch einen Schacht 15 wird das Reaktorgefäß entleert.

Die Schüttung wird über die Öffnung 7 in den zwischen Innenmantel 2 und Außenwandung 3 des Reaktorgefäßes 1 gebildeten rotationssymmetrischen ringförmigen Reaktorraum 16 eingeführt. Die Schüttungen sind je nach Verwendungszweck der Reaktorvorrichtung unterschiedlicher Natur, beispielsweise sind für Filtervorgänge Filtermaterialien vorgesehen oder bei Trocknungsvorgängen kann die Schüttung als Getreide oder dergleichen ausgebildet sein. Die Schüttung 16 wird von einem Fluid zum Beispiel einem Gas durchströmt, das in die untere Kammer 10 über die Zuführung 17 eingelassen wird und über den Auslaß 18 an der oberen Kammer 9 ausströmt. Das Fluid wird somit im einfachen Kreuzgegenstrom geführt, d.h., es strömt in die untere Kammer 10, durch die Außenwandung 6 hindurch, durch die Schüttung 16 und die Innenwandung 4 in den Innenraum des Innenmantels und von dort wieder zurück über die Innenwandung 4, die Schüttung 16, die Außenwandung 3 in die obere Kammer 9 und von dort über den Auslaß 18 nach außen.

Die über die Öffnung 7 eingelassene Schüttung wird mit Hilfe der Rührarme 8 auf den ringförmigen Reaktorraum 16 gleichmäßig verteilt. Die als Förderspiralen 11 ausgebildeten Schaufeln auf dem Innenmantel 2 fördern die Schüttung mit der Drehung nach oben, wobei sie diese auflockern und gleichmäßig verteilen. Die Außenwandung 3 und Innenwandung 4 sind dabei derart ausgebildet, daß sie das Fluid hindurchströmen lassen, während die Schüttungen nicht hindurchrieseln können. Beispielsweise können Siebbleche, Streckbleche oder auch konusförmige Einzelsegmente vorgesehen sein.

Zum Austrag der Schüttung, beispielsweise bei einem Filtervorgang der gesättigten Filtermaterialien oder bei einem Trocknungsvorgang des getrockneten Getreides, drehen sich die Schaufeln 14 und befördern die Schüttung vom ringförmigen Reaktorraum nach innen zu dem Schacht 16.

Die Reaktorvorrichtung nach Fig. 1 kann für Trocknungsvorgänge, Spülgaspyrolysen, Adsorptionen, Filtrationen und dergleichen verwendet werden.

In Fig. 3 ist ein zu Fig. 1 ähnliches Ausführungsbeispiel dargestellt, wobei hier eine dritte Kammer 19 vorgesehen ist. Außerdem weist der Innenmantel 2 etwa in der Mitte eine Trennfläche 20 auf. Diese Anordnung ermöglicht eine Führung des Fluids je zweimal im Kreuzgegenstrom, wodurch eine bessere Gegenstromführung oder eine bessere Filterwirkung ermöglicht wird. Diese Reaktorvorrichtung nach Fig. 3 ist für die gleichen Anwendungsfälle wie die Vorrichtung nach Fig. 1 vorgesehen.

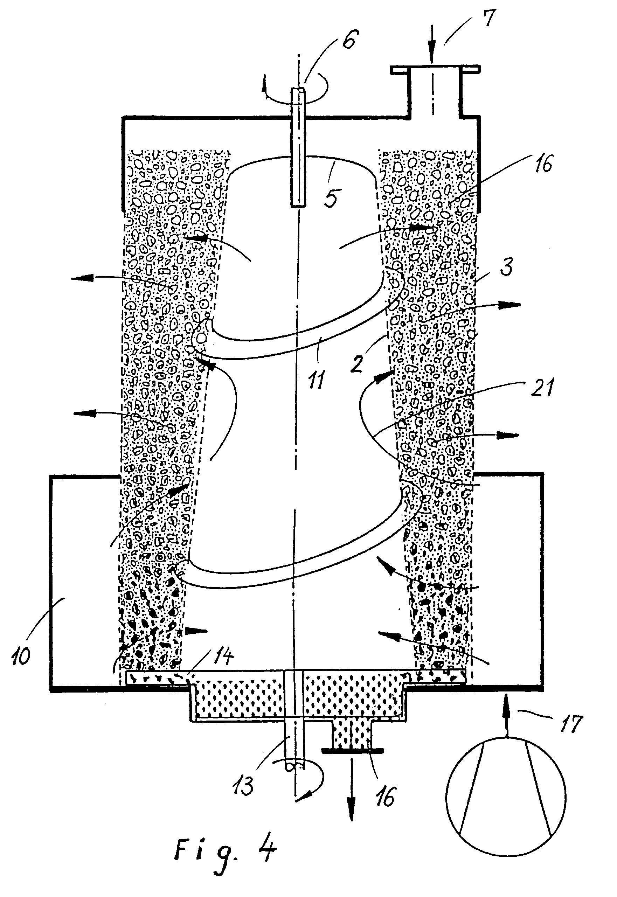

Fig. 4 zeigt eine Reaktorvorrichtung, bei der keine zweite obere Kammer vorgesehen ist, sondern das Fluid direkt in die freie Umgebung strömt. Die Strömungen des Fluids sind wie in allen Ausführungsbeispielen durch die Pfeile 21 dargestellt. Das Ausführungsbeispiel nach Fig. 4 ist vor allem für Trockner oder Wanderbettfilter geeignet.

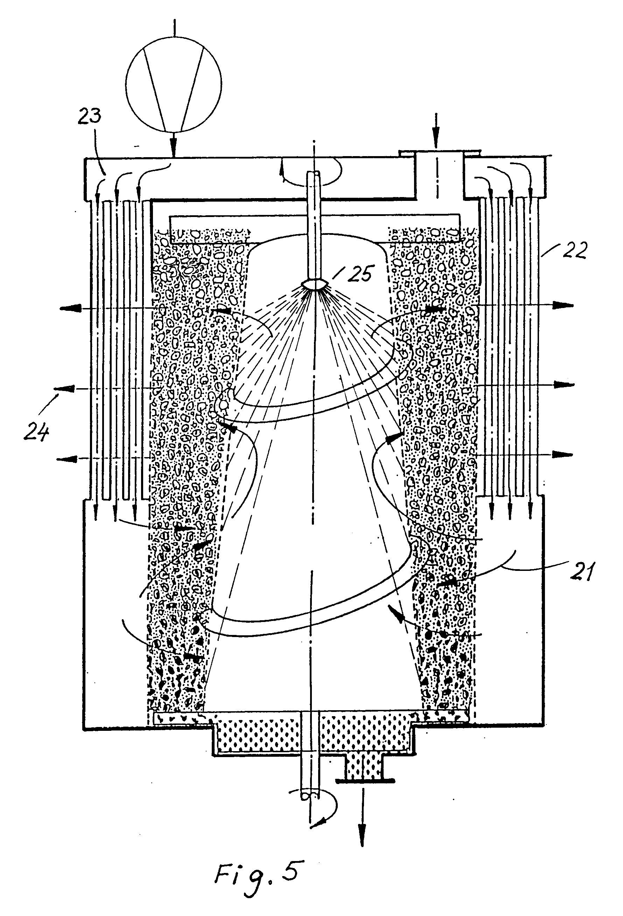

Fig. 5 zeigt ein Ausführungsbeispiel, das insbesondere für Trockner und Kompostanlagen geeignet ist. Dabei ist ein Wärmetauscher 22 vorgesehen, der zumindest teilweise die Außenwandung 3 des Reaktorgefäßes 1 umgibt. Dabei wird das einströmende Fluid 23 durch den Wärmetauscher 22 geführt, wobei das ausströmende Fluid 24 die Wärme zur Verfügung stellt. Es wird somit eine Wärmerückführung vom ausströmenden Fluid 24 zum einströmenden Fluid 23 realisiert. Durch diese Vorrichtung können beispielsweise Kompostanlagen erstellt werden, da bei dem Kompostierungsprozeß eine möglichst gleichbleibende Temperatur vorgesehen sein soll. Für eine Kompostanlage wird zusätzlich über eine Vorrichtung 25 Wasser in den Reaktorraum eingesprüht.

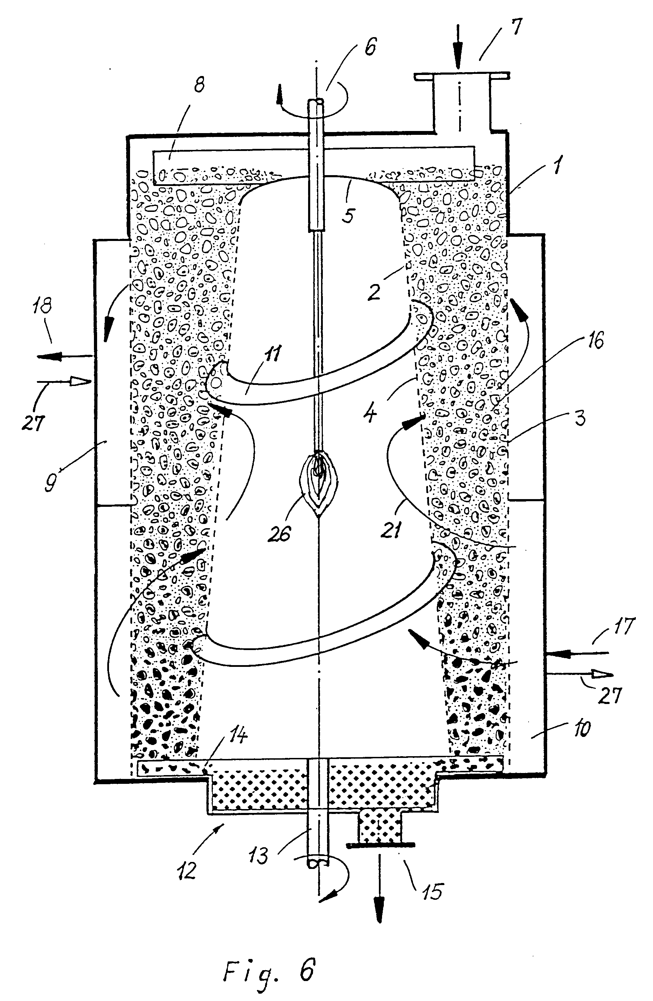

In Fig. 6 ist ein Regenerator für die Wärmeregenerierung dargestellt. Dabei besteht die Schüttung vorzugsweise aus einem Sand- oder Kugelbett, das nach außen einen Temperaturgradienten aufweist. Bei dieser Vorrichtung ist eine Beheizung 26 des Innenraums bzw. des Reaktorraums 16 vorgesehen, die über heiße Gase oder Brenngase realisiert wird. Die Strömungsrichtung des Fluids wird bei diesem Ausführungsbeispiel periodisch gewechselt, wobei diese Umkehrung durch die Pfeile 27 angedeutet wird. Das einströmende Fluid, das vorzugsweise als Gas ausgebildet wird, wird dabei in der Schüttung erwärmt, erfährt eine zusätzliche Erwärmung durch die Beheizung 26 und gibt beim Austritt den größten Teil der Wärme wieder an die Schüttung ab. Beim Wechsel der Strömungsrichtung erfolgt eine Umkehrung des Wärmeüberganges. Diese Ausführungsform eines Regenerators ist insbesondere dann sinnvoll, wenn der Druckverlust besonders gering sein soll und die Schüttung wegen Verschmutzung kontinuierlich oder diskontinuierlich ausgetauscht werden soll.

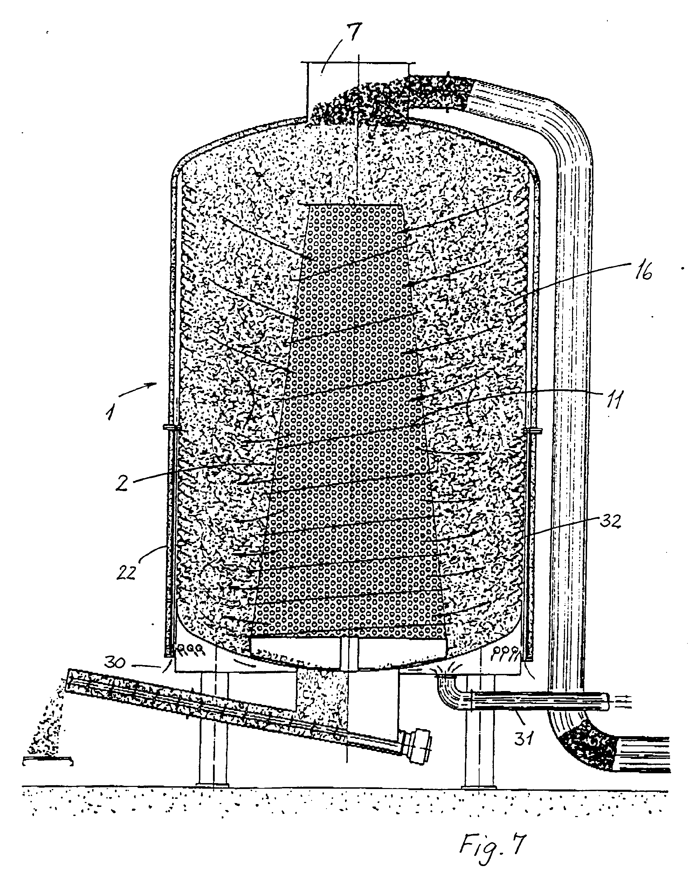

Fig. 7 zeigt ein weiteres Ausführungsbeispiel der Reaktorvorrichtung zur Kompostierung. Der zu behandelnde Kompost wird von oben her in das Reaktorgefäß 1 eingefüllt. Der Wärmetauscher 22 umgibt das Reaktorgefäß 1 im unteren Bereich und kalte Luft 30 wird von unten her eingeführt und erwärmt sich auf dem Weg nach oben und dringt durch die durchlässige Außenwandung in den Reaktorraum 16, durchströmt den Kompost nach innen und dann wieder nach außen, wobei sie die bei der Behandlung des Komposts auftretende Wäme aufnimmt, und wird über einen Ringraum 32 nach unten geleitet und über einen Auslaß 31 abgeführt. Somit wird der Kompost im Kreuzgleichstrom durchströmt.

Das für die Behandlung des Komposts notwendige Wasser wird im Bereich der Leitschaufeln 11 an dem drehbaren, konusförmigen Innenmantel 2 beziehungsweise über die Leitschaufeln 11 selbst eingeführt.

Durch die Anordnung des Wärmetauschers 22 im unteren Bereich, die Durchströmung des Komposts im Kreuzgleichstrom und durch die Wassereinbringung an den über die am Innenmantel 2 angeordneten Leitschaufeln wird eine gleichmäßige Luftfeuchtigkeit und Temperatur in dem Reaktorraum 16 erzielt.

## Patentansprüche

1. Reaktorvorrichtung zur großflächigen Durchströmung von Wanderbettschüttungen mittels eines Fluids mit einem einen Einlaß für die Schüttung aufweisenden Reaktorgefäß, in dem die Wanderbettschüttung aufgenommen ist, wobei zwischen einer Innenwandung und der Außenwandung des Reaktorgefäßes ein radialsymmetrischer ringförmiger Reaktorraum gebildet ist, und die Außen- und Innenwandungen zur radialen Durchströmung des Fluids gas- und/oder flüssigkeitsdurchlässig sind,
**dadurch gekennzeichnet,**
daß die Innenwandung (4) und/oder die Außenwandung (3) zur Egalisierung der Schüttung und Vermeidung von Brückenbildungen drehbar angeordnet sind.

2. Vorrichtung nach Anspruch 1, dadurch gekennzeichnet, daß die Zuführung (17) und der Auslaß (18,3) für das Fluid und Umlenkanordnungen derart vorgesehen sind, daß das Fluid zur Durchströmung der Schüttung von außen nach innen und/oder innen nach außen in radialer Richtung im Kreuzstrom, Kreuzgleichstrom oder Kreuzgegenstrom geführt ist.

3. Vorrichtung nach einem der Ansprüche 1 bis 2, dadurch gekennzeichnet, daß an der drehbaren Innen- und/oder Außenwandung (3,4) zum Reaktorraum (16) gerichtete Leitschaufeln (11) angeordnet sind, die die Schüttung infolge der Drehbewegung auflockern.

4. Vorrichtung nach einem der Ansprüche 1 bis 3, dadurch gekennzeichnet, daß im Bereich des Einlasses (7) für die Schüttung eine mit der drehbaren Innen- und/oder Außenwandung verbundene Verteilvorrichtung (8) vorgesehen ist, die die Schüttung im Einlaß auf den gesamten Querschnitt des Reaktorraums (16) verteilt.

5. Vorrichtung nach einem der Ansprüche 1 bis 4, dadurch gekennzeichnet, daß die drehbare Innenwandung (4) als sich nach oben konisch verjüngender Innenmantel (2) ausgebildet ist und daß die Leitschaufeln (11) derart an dem Innenmantel (2) angeordnet sind, daß die Auflockerung der Schüttung vorzugsweise nach oben erfolgt.

6. Vorrichtung nach einem der Ansprüche 1 bis 5, dadurch gekennzeichnet, daß die Außenwandung (3) des Reaktorgefäßes (1) mit zwei übereinanderliegenden Kammern (9,10) umgeben ist, wobei die Zuführung (17) mit der Kammer (10) und der Auslaß (18) mit der Kammer (9) derart in Verbindung stehen, daß das die Schüttung durchströmende Fluid zunächst durch die Kammer (10) radialsymmetrisch von außen in Kreuzstrom durch die Schüttung geführt und dann von innen im Kreuzgegenstrom durch die zweite Kammer (9) geführt ist.

7. Vorrichtung nach Anspruch 6, dadurch gekennzeichnet, daß die zweite Kammer (9) keine Außenwand aufweist und das Fluid direkt ins Freie ausströmt.

8. Vorrichtung nach einem der Ansprüche 1 bis 7, dadurch gekennzeichnet, daß eine Vorrichtung (26) zur Zuführung von heißen Gasen und/oder Brenngasen vorgesehen ist, die das Fluid erwärmen.

9. Vorrichtung nach einem der Ansprüche 1 bis 8, dadurch gekennzeichnet, daß das durchströmende Fluid periodisch in seiner Strömungsrichtung geändert wird.

10. Vorrichtung nach einem der Ansprüche 1 bis 9, dadurch gekennzeichnet, daß ein Wärmetauscher (22) vorgesehen ist, durch den das einströmende Fluid (23) durch das ausströmende Fluid (24) erwärmt wird.

11. Vorrichtung nach Anspruch 10. dadurch gekennzeichnet, daß der Wärmetauscher (22) die Außenwandung (3) des Reaktorgefäßes (1) zumindest teilweise umgibt.

12. Vorrichtung nach einem der Ansprüche 1 bis 11, dadurch gekennzeichnet, daß zur Anwendung für einen Kompostierungsprozeß eine Vorrichtung (25) zur Zuführung von Wasser in den Reaktorraum (16) vorgesehen ist.

13. Vorrichtung nach einem der Ansprüche 1 bis 12, dadurch gekennzeichnet, daß am Boden des Reaktorgefäßes (1) eine Drehvorrichtung (13) mit Schaufeln (14) zur gleichmäßigen Austragung der Schüttung angeordnet ist.

## Claims

1. Reactor for large area flow-through of moving-bed charges by means of a fluid comprising a reactor vessel with an inlet for the charge, in which the moving-bed charge is accommodated and wherein between an inside wall and the outside wall of the reactor is formed a radial-symmetrical circular reactor area and the outside and inside walls are gas- and/or liquid-permeable for radial flow-through of the fluid, **characterised in that** the inside wall (4) and/or the outside wall (3) are arranged to be rotatable for the purpose of equalizing the charge and preventing a formation of cross links.

2. Device according to claim 1, **characterised in that** the feed (17) and the outlet (18,3) for the fluid and diverting arrangements are provided in such a manner that flow-through of the fluid is facilitated by being ducted from the outside to the inside and/or from the inside to the outside in a radial direction in cross flow, unidirectional cross flow or counter-directional cross flow.

3. Device according to one of claims 1 to 2, **characterised in that** guide vanes (11), which are oriented towards the reactor area (16) and which loosen the charge due to rotary movement, are arranged on the rotary inside and/or outside wall (3, 4).

4. Device according to one of claims 1 to 3, **characterised in that** in the area of the charge inlet (7) is provided a distributing device (8), which is connected to the rotatable inside and/or outside wall and which distributes the charge in the inlet over the entire cross-section of the reactor area (16).

5. Device according to one of claims 1 to 4, **characterised in that** the rotatable inside wall (4) is arranged to be an upwardly conically narrowing inner casing (2), and that the guide vanes (11) are arranged on the inner casing (2) in such a manner that the charge is preferably loosened in an upward direction.

6. Device according to one of claims 1 to 5, **characterised in that** the outside wall (3) of the reactor vessel (1) is surrounded by two chambers (9, 10) placed on top of each other, in which respect the feed (17) and chamber (10), and the outlet (18) and chamber (9), are connected in such a manner that the fluid which flows through the charge is initially guided through the chamber (10) radial-symmetrically from the outside in cross flow through the charge, and then from the inside in counter-directional cross flow through the second chamber (9).

7. Device according to claim 6, **characterised in that** the second chamber (9) has no outside wall and that the fluid flows directly into the open.

8. Device according to one of claims 1 to 7, **characterised in that** a device (26) is provided for feeding hot gases and/or combustion gases which heat the fluid.

9. Device according to one of claims 1 to 8, **characterised in that** the direction of flow of through-flowing fluid is periodically changed.

10. Device according to one of claims 1 to 9, **characterised in that** a heat exchanger (22) is provided, by means of which entering fluid (23) is heated by exiting fluid (24).

11. Device according to claim 10, **characterised in that** the heat exchanger (22) at least partially surrounds the outside wall (3) of the reactor vessel (1).

12. Device according to one of claims 1 to 11, **characterised in that** a device (25) for feeding water into the reactor area (16) is provided for use in a composting process.

13. Device according to one of claims 1 to 12, **characterised in that** at the bottom of the reactor vessel (1) is arranged a rotary device (13) with vanes (14) for even distribution of the charge.

## Revendications

1. Réacteur destiné au passage d'un fluide par une grande surface de matières de lit mobile, comprenant un récipient de réacteur qui présente une entrée pour la matière en vrac et dans lequel la matière en vrac du lit mobile est reçue, une chambre de réacteur annulaire radialement symétrique étant formée entre une paroi interne et la paroi externe du récipient de réacteur, les parois externe et interne étant perméables aux gaz et/ou liquides pour le passage radial du fluide, caractérisé en ce que la paroi interne (4) et/ou la paroi externe (3) sont agencées de manière à pouvoir tourner en vue d'égaliser la matière en vrac et d'éviter des formations de ponts.

2. Dispositif suivant la revendication 1, caractérisée en ce que l'alimentation (17) et la sortie (18, 3) du fluide et des dispositifs de déviation sont prévus de telle façon que le fluide destiné à traverser la matière en vrac soit guidé de l'extérieur vers l'intérieur et/ou de l'intérieur vers l'extérieur en direction radiale dans un courant croisé, un courant parallèle croisé ou un contre-courant croisé.

3. Dispositif suivant l'une des revendications 1 et 2, caractérisé en ce que des pales directrices (11), qui sont dirigées vers la chambre de réacteur (16) et qui disloquent la matière en vrac à la suite du mouvement de rotation, sont agencées sur les parois interne et/ou externe (3, 4) rotatives.

4. Dispositif suivant l'une des revendications 1 à 3, caractérisé en ce que, dans la zone de l'entrée (7) de la matière en vrac, il est prévu un dispositif de répartition (8) qui est relié à la paroi interne et/ou externe rotative et qui, à l'entrée, répartit la matière en vrac sur la totalité de la section transversale de la chambre de réacteur (16).

5. Dispositif suivant l'une des revendications 1 à 4, caractérisé en ce que la paroi interne rotative (4) est réalisée sous la forme d'une enveloppe interne (2) qui s'amincit de manière conique vers le haut et en ce que les pales directrices (11) sont agencées sur l'enveloppe interne (2) de telle façon que la dislocation de la matière en vrac s'effectue de préférence vers le haut.

6. Dispositif suivant l'une des revendications 1 à 5, caractérisé en ce que la paroi externe (3) du récipient de réacteur (1) est entourée de deux chambres superposées (9, 10), l'alimentation (17) étant en communication avec la chambre (10) et la sortie (18) avec la chambre (9) de façon que le fluide traversant la matière en vrac soit tout d'abord guidé à travers la chambre (10) de manière radialement symétrique depuis l'extérieur dans un courant croisé à travers la matière en vrac et ensuite de l'intérieur dans un contre-courant croisé à travers la deuxième chambre (9).

7. Dispositif suivant la revendication 6, caractérisé en ce que la deuxième chambre (9) ne présente pas de paroi extérieure et en ce que le fluide s'écoule directement dans l'air libre.

8. Dispositif suivant l'une des revendications 1 à 7, caractérisé en ce qu'un dispositif (26) d'alimentation de gaz chauds et/ou de gaz combustibles, qui chauffent le fluide, est prévu.

9. Dispositif suivant l'une des revendications 1 à 8, caractérisé en ce que le fluide de passage est périodiquement modifié dans son sens d'écoulement.

10. Dispositif suivant l'une des revendications 1 à 9, caractérisé en ce qu'on prévoit un échangeur de chaleur (22) à travers lequel le fluide entrant (23) est chauffé par le fluide sortant (24).

11. Dispositif suivant la revendication 10, caractérisé en ce que l'échangeur de chaleur (22) entoure au moins partiellement la paroi externe (3) du récipient de réacteur (1).

12. Dispositif suivant l'une des revendications 1 à 11, caractérisé en ce que, pour l'application d'un processus de compostage, on prévoit un dispositif (25) pour l'amenée d'eau dans la chambre de réacteur (16).

13. Dispositif suivant l'une des revendications 1 à 12, caractérisé en ce qu'au fond du récipient de réacteur (1) est agencé un dispositif rotatif (13) à ailes (14) pour l'évacuation uniforme de la matière en vrac.
